# FASCICULE DE BREVET EUROPEEN

(11) **EP 3 328 250 B1**
(45) Date de publication et mention de la délivrance du brevet: **27.05.2020**
(21) Numéro de dépôt: 16753411.4
(22) Date de dépôt: 21.07.2016
(51) Int. Cl.: A47J 37/04, A47J 37/06, A47J 36/32

(54) **PROCÉDÉ DE CUISSON POUR APPAREIL DE CUISSON AVEC MOYEN DE REMUAGE ET APPAREIL DE CUISSON CORRESPONDANT**
KOCHVERFAHREN FÜR EINE KOCHVORRICHTUNG MIT RÜHRMITTEL UND ENTSPRECHENDE KOCHVORRICHTUNG
COOKING METHOD FOR A COOKING APPLIANCE INCLUDING A STIRRING MEANS, AND CORRESPONDING COOKING APPLIANCE

(30) Priorité: 30.07.2015 FR 1557335
(43) Date de publication de la demande: 06.06.2018
(73) Titulaire: SEB S.A., 69130 Ecully (FR)
(72) Inventeur: DELRUE, Olivier, 21260 Selongey (FR); LETAIN, François, 21120 Marcilly-sur-Tille (FR)
(74) Mandataire: Soares, Luis Filipe
(86) Numéro de dépôt international: PCT/FR2016/051906
(87) Numéro de publication internationale: WO 2017/017356

(56) Documents cités:
- WO-A1-2014/068225
- WO-A1-2014/125200
- CA-A1- 2 805 606
- CN-Y- 201 332 970
- DE-U1-202005 021 931
- FR-A1- 3 004 630

## Description

La présente invention concerne le domaine technique des procédés de cuisson pour appareils électriques de cuisson comportant un moyen de remuage agencé dans un moyen de réception d'aliments ainsi que les appareils de cuisson correspondants.

La présente invention concerne notamment, mais non exclusivement, un procédé de cuisson pour les appareils électriques prévus pour le brassage et la cuisson d'aliments en morceaux, tels que les frites ou morceaux de poulet, comportant un moyen de remuage disposé dans une cuve agencée dans un boîtier logeant un dispositif de chauffage à air chaud, dans lesquels le moyen de remuage et la cuve sont conçus pour être mis en mouvement l'un par rapport à l'autre, de manière à brasser et remuer les aliments et la matière grasse au sein de la cuve. Le document WO2006/000699 divulgue de tels appareils de cuisson.

Le document FR 3004630 divulgue un procédé de cuisson qui utilise un appareil de cuisson du type précité comportant une pale de remuage entraînée en rotation dans un récipient. Un inconvénient rencontré avec ce procédé est qu'il est adapté pour cuire un seul type d'ingrédient à un niveau de cuisson particulier. En effet le procédé permet de cuire des ingrédients recouverts de panures, en contrôlant la température de consigne de l'appareil ainsi que le remuage de l'ingrédient et ceci afin de ne pas dégrader les ingrédients.

Si on souhaite réaliser une cuisson de plusieurs ingrédients dans le même temps et à des niveaux différents de cuisson, comme c'est le cas dans une recette élaborée, il faut cuire ceux-ci les uns après les autres en les ajoutant dans le moyen de réception au fur et à mesure de la cuisson. Une telle cuisson est toutefois longue puisqu'elle nécessite à chaque étape d'une recette d'éteindre l'appareil pour rajouter les ingrédients suivants, et ensuite rallumer l'appareil pour poursuivre la cuisson une fois les nouveaux ingrédients placés dedans. En outre les résultats organoleptiques des ingrédients peuvent être altérés puisque la cuisson n'est pas homogène dans le temps en partie due aux différentes manipulations.

Un objet de la présente invention est de proposer un procédé de cuisson amélioré permettant de cuire plusieurs ingrédients disposés ensemble dans le moyen de réception, chacun à des niveaux de cuisson différents.

Un objet de la présente invention est de proposer également un procédé de cuisson permettant de cuire plusieurs ingrédients à des niveaux de cuisson différents plus rapidement et de façon optimisée.

Un objet de la présente invention est de proposer un procédé de cuisson permettant de cuire plusieurs ingrédients disposés ensemble à des niveaux de cuisson différents en conservant les qualités organoleptiques des ingrédients.

Un objet de la présente invention est de proposer un appareil de cuisson permettant de cuire rapidement et de façon optimisée, plusieurs ingrédients disposés ensemble à des niveaux de cuisson différents.

Un objet de la présente invention est de proposer un appareil de cuisson permettant de cuire plusieurs ingrédients disposés ensemble à des niveaux de cuisson différents en conservant les qualités organoleptiques des aliments.

Ces objets sont atteints par un procédé de cuisson pour un appareil de cuisson comprenant un moyen de réception prévu pour recevoir des ingrédients, un moyen de remuage disposé au sein du moyen de réception, au moins un moyen de chauffe principal, au moins un moteur de ventilation pour générer un flux chauffant, le moyen de réception et le moyen de remuage étant conçus pour être animés d'un mouvement relatif de rotation à une certaine vitesse, l'appareil comprenant au moins une interface de commande du mouvement relatif de rotation, du au moins un moyen de chauffe principal et du au moins un moteur de ventilation, caractérisé en ce que le procédé de cuisson comprend au moins les étapes suivantes :
- une étape initiale dans laquelle au moins un type d'ingrédient est disposé selon une disposition précise dans au moins deux zones de cuisson distinctes du moyen de réception où une des deux zones se trouve au moins en partie directement sous le flux chauffant ;
- une première étape de cuisson durant laquelle le mouvement relatif de rotation du moyen de réception et du moyen de remuage est neutralisé, au moins un moyen de chauffe principal est commandé pour réguler la température selon une première valeur de consigne et au moins un moteur de ventilation est commandé pour réguler le flux chauffant selon une première vitesse de circulation ;
- une deuxième étape de cuisson durant laquelle le mouvement relatif de rotation du moyen de réception et du moyen de remuage est actif selon une première vitesse du mouvement relatif de rotation du moyen de réception et du moyen de remuage et au moins un moyen de chauffe principal est commandé pour réguler la température selon une deuxième valeur de consigne, supérieure ou égale à la première et au moins un moteur de ventilation est commandé pour réguler le flux chauffant selon une deuxième vitesse de circulation.

De cette manière, en fonction des zones de cuisson, la cuisson d'un premier type d'ingrédient va s'opérer principalement lors de la première étape de cuisson et la cuisson d'un second type d'ingrédient va principalement s'effectuer lors de la seconde étape de cuisson, en même temps que la cuisson du premier type d'ingrédient sera finalisée lors de cette seconde étape de cuisson. Ce procédé de cuisson a pour effet que des types d'ingrédients ayant des profils de cuisson différents peuvent être cuits dans un même temps de cuisson global et dans le même appareil de manière à obtenir à la fin du temps de cuisson global, des ingrédients qui soient tous bien cuits.

De façon avantageuse, la deuxième étape de cuisson est réitérée avec une troisième température de consigne, une troisième vitesse de circulation du flux chauffant et une deuxième vitesse du mouvement relatif de rotation du moyen de réception et du moyen de remuage.

L'effet de pouvoir réitérer la deuxième étape de cuisson permet de cuire plus finement les ingrédients qui ont été brassés de manière à obtenir des qualités gustatives améliorées.

De façon avantageuse, la première valeur de consigne est comprise entre 80°C et 150°C.

L'effet d'avoir une valeur de consigne comprise entre ces valeurs est de pouvoir cuire des aliments fragiles à la cuisson.

De façon avantageuse, la deuxième valeur de consigne est comprise entre 100°C et 200°C.

L'effet d'avoir une valeur de consigne comprise entre ces valeurs est de pouvoir cuire des aliments qui sont peu fragiles.

De façon avantageuse, le temps de cuisson cumulé des deux étapes de cuisson correspond au temps de cuisson sélectionné par un utilisateur.

De cette manière la cuisson des différents types d'ingrédients est finie à la fin du temps de cuisson sélectionné par l'utilisateur.

De façon avantageuse, la première ou la seconde vitesse du mouvement relatif de rotation du moyen de réception et du moyen de remuage est comprise entre 0 et 10 tr/min.

Cela permet que les différents types d'ingrédients soient brassés ensemble lors de la deuxième étape de cuisson et que l'ensemble des ingrédients puisse être cuit.

De façon avantageuse, la première vitesse de circulation du flux est comprise entre 10 et 25 m/s.

Une telle vitesse de circulation du flux permet un bon échange calorifique avec les ingrédients.

De façon avantageuse, la deuxième vitesse de circulation du flux est comprise entre 10 et 25 m/s.

Une telle vitesse de circulation du flux permet un bon échange calorifique avec les ingrédients.

De façon avantageuse, l'appareil de cuisson comprend un module de communication qui est configuré pour recevoir un ou plusieurs signaux de commande d'un terminal (TER) le ou lesdits signaux comprenant au moins une donnée de la première et/ou de la deuxième valeur de consigne de température , et/ou une donnée sur le mouvement relatif de rotation du moyen de réception et du moyen de remuage et/ou une donnée sur la première et deuxième vitesse de circulation du flux et/ou des données de temps de cuisson.

L'effet obtenu de déporter le contrôle de l'appareil à partir d'un terminal est de pouvoir réduire les couts des moyens électroniques à implémenter dans l'appareil et aussi d'augmenter l'autonomie d'un utilisateur.

Ces objets sont également atteints avec un produit programme d'ordinateur comprenant des instructions de code agencées pour mettre en œuvre les étapes d'un procédé énoncé ci-dessus, lorsque ledit programme est exécuté sur une interface de commande d'un appareil de cuisson.

Ces objets sont également atteints avec un appareil de cuisson comprenant une interface de commande ayant en mémoire les instructions de code d'un produit programme d'ordinateur tel que décrit précédemment et agencée pour exécuter un tel produit programme d'ordinateur.

D'autres avantages et particularités de la présente invention apparaîtront dans la description des modes de réalisation donnés à titre d'exemple non limitatif et illustrés par les dessins mis en annexe où :
- la figure 1 est une vue en coupe longitudinale d'un premier exemple de réalisation d'un appareil de cuisson pour mettre en œuvre le procédé selon l'invention,
- la figure 2 est une vue de dessus d'un second exemple de réalisation d'un appareil de cuisson pour mettre en œuvre le procédé selon l'invention,
- la figure 3 est un schéma illustrant la communication entre l'appareil de cuisson et un terminal distant selon les deux modes de réalisation,
- la figure 4 est un ordinogramme présentant les étapes d'un procédé de cuisson d'un appareil de cuisson selon les deux modes de réalisation.

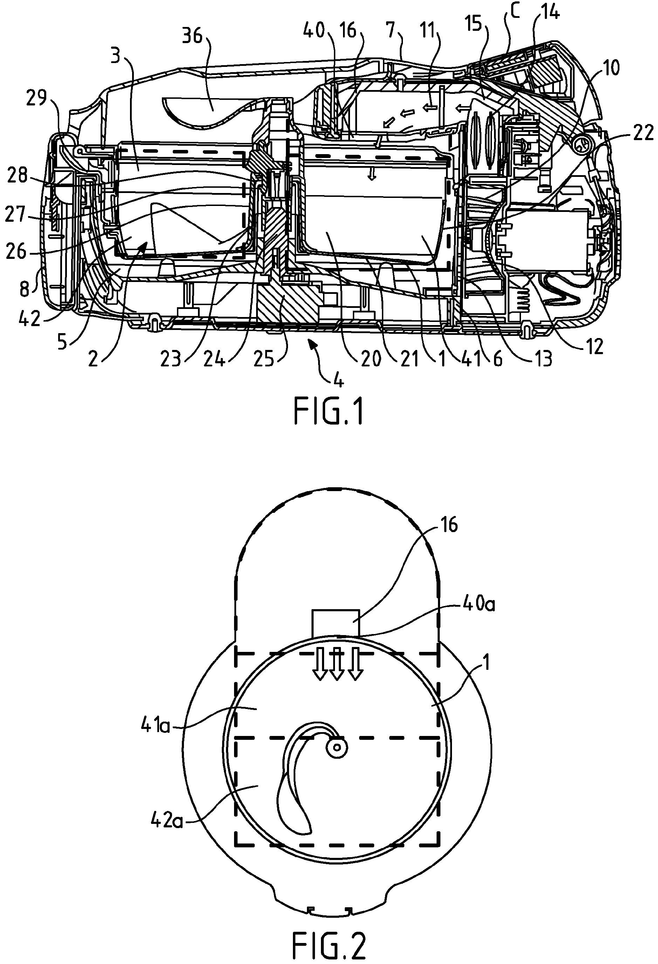

L'appareil de cuisson représenté à la figure 1 comprend un moyen de réception 1 prévu pour recevoir les ingrédients, un moyen de remuage 2 disposé au sein du moyen de réception 1. Le moyen de réception 1 présente une ouverture supérieure 3. Le moyen de réception 1 et le moyen de remuage 2 sont conçus pour être animés d'un mouvement relatif de rotation l'un part rapport à l'autre.

Plus particulièrement, le moyen de réception 1 est agencé dans un boîtier 4. Le boîtier 4 définit un logement 5 dans lequel est agencé le moyen de réception 1. Le boîtier 4 comporte un corps 6 surmonté d'un couvercle 7.

L'appareil de cuisson comporte au moins un moyen de chauffe principal 10. Tel que représenté sur la figure 1, le moyen de chauffe principal 10 génère un flux chauffant 11 entrant dans le moyen de réception 1 par l'ouverture supérieure 3.

Plus particulièrement, l'appareil de cuisson comporte un ventilateur 12 prévu pour aspirer l'air présent dans le logement 5 par une admission d'air 13 et pour propulser l'air sur un élément chauffant 14 agencé dans un conduit 15. Le conduit 15 est prolongé par une tuyère de sortie 16 qui débouche dans le logement 5 au niveau d'une sortie 40. Dans le premier mode de réalisation la sortie 40 de la tuyère de sortie 16 est positionnée au dessus du moyen de réception 1 et elle est configurée de telle manière que l'air débouche principalement dans une première zone 41 du moyen de réception 1 positionnée directement sous cette sortie 40. Ceci a pour effet que les ingrédients positionnés en dessous de la sortie 40 et dans la première zone 41 sont soumis à un apport calorifique important et cuisent donc vite.

A contrario le moyen de réception 1 comprend une deuxième zone 42 qui est excentrée de la sortie 40 de la tuyère de sortie 16, c'est-à-dire qui n'est pas positionnée directement sous celle-ci et où les ingrédients ne sont donc pas exposés directement au flux d'air chaud qui en sort. Les ingrédients positionnés dans cette deuxième zone 42 cuisent donc en général moins vite que ceux positionnés dans la première zone 41, dès lors que le moyen de réception 1 et le moyen de remuage 2 ne sont pas animés d'un mouvement relatif de rotation l'un part rapport à l'autre.

Dans la seconde variante représentée à la figure 2, l'appareil de cuisson est équivalent à celui représenté à la figure 1, à la différence que la sortie 40a de la tuyère de sortie 16 est positionnée sur le coté du moyen de réception. Toutefois la sortie 40a de la tuyère de sortie 16 est configurée de telle sorte que l'air frappe principalement une première zone 41a du moyen de réception 1 positionnée directement à côté de cette sortie 40a. Ceci a pour effet que les ingrédients positionnés au niveau de la première zone 41a à côté de la sortie 40a sont soumis à un apport calorifique important et cuisent donc plus vite. Toujours dans la variante illustrée sur la figure 2, le moyen de réception comprend une deuxième zone 42a qui est positionnée à l'opposé de la sortie 40a de la tuyère de sortie 16. Dans ce cas les ingrédients ne sont donc pas exposés directement au flux d'air chaud et cuisent donc en général moins vite que ceux positionnés dans la première zone 41a dès lors que le moyen de réception 1 et le moyen de remuage 2 ne sont pas animés d'un mouvement relatif de rotation l'un part rapport à l'autre.

Plus particulièrement, le moyen de réception 1 est formé par une cuve 20 comportant un fond 21 et une paroi latérale 22. Selon la variante de réalisation de la figure 1, le fond 21 est incliné vers le bas en direction de la paroi latérale 22. La cuve 20 présente une ouverture centrale 23 prévue pour le passage d'un axe d'entraînement 24 entraîné en rotation par un moteur 25. Une cheminée 26 est montée sur l'ouverture centrale 23. Le moyen de remuage 2 est monté sur l'axe d'entraînement 24. Le moyen de remuage 2 présente un organe d'accrochage 27 prévu pour venir en prise avec un organe de retenue 28 ménagé dans la cheminée 26. La cuve 20 est avantageusement réalisée en matériau métallique, de préférence en matériau métallique revêtu ou en acier inoxydable. Le moyen de réception 1 comporte un support 29 fixé à la cuve 20. Le moyen de réception 1 comporte une poignée 8. La poignée 8 est par exemple montée articulée sur le support 29.

Le moyen de réception 1 est monté amovible par rapport au boîtier 4.

Selon l'invention, le moyen de remuage est entrainé en rotation par un moteur en liaison mécanique avec l'axe d'entrainement 24.

Le moteur est commandé par une interface de commande C électronique assurant l'activation ou la neutralisation du moteur et donc la rotation du moyen de remuage 2. La vitesse moyenne de rotation du moyen de remuage 2 est comprise entre 0 et 10 tr/min.

De même l'interface de commande C assure l'alimentation des moyens de chauffe 10 de l'appareil. Notamment, l'interface de commande électronique est conformée pour assurer le fonctionnement de l'appareil selon au moins deux niveaux de température et elle permet notamment de mettre en marche l'appareil, de choisir, modifier ou annuler un mode de cuisson préprogrammé dans l'interface de commande électronique.

L'appareil comprend également un produit programme d'ordinateur qui comprend des instructions de code. Ces instructions de code sont en mémoire dans l'interface de commande et elles sont agencées pour mettre en œuvre les étapes du procédé qui sera détaillé ci-dessous. Le programme d'ordinateur est quant à lui, exécuté par l'interface de commande de l'appareil de cuisson.

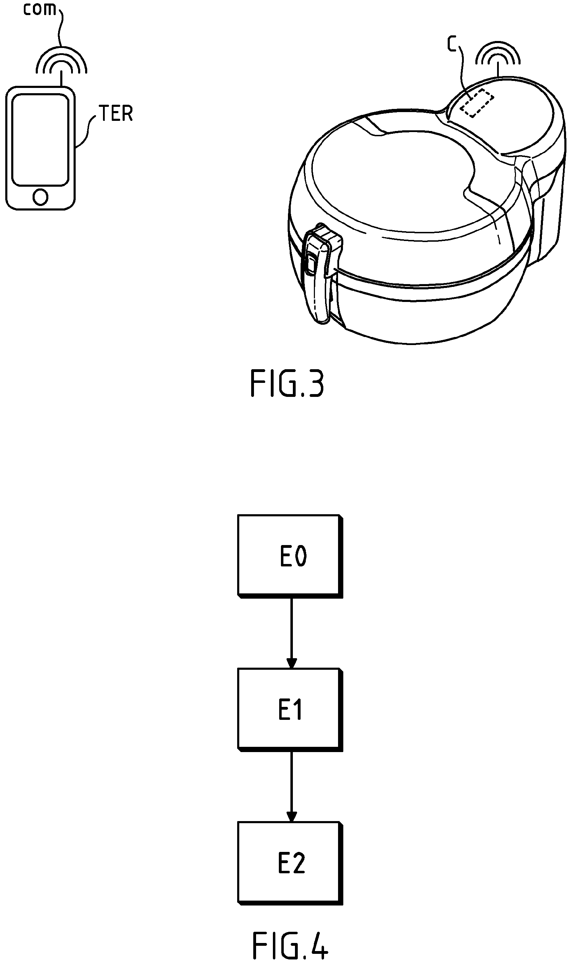

Comme représenté à la figure 3, l'appareil de cuisson peut comprendre un module de communication qui est relié à l'interface de commande. Ce module de communication permet de recevoir des signaux de commande ou des informations d'un dispositif ou terminal distant (TER) comme un ordinateur ou un Smartphone. La communication entre ces dispositifs peut se faire par tout protocole de communication (com) connu, notamment du WIFI, du Bluetooth ® ou de la radio fréquence.

Le ou les signaux de commande peuvent être des instructions de commande qui comprennent un ensemble de données nécessaires à la mise en œuvre du procédé selon l'invention. Les données transmises peuvent concerner notamment la température de consigne, le mouvement relatif de rotation du moyen de réception 1 et du moyen de remuage 2 ainsi que la vitesse de la rotation, la vitesse de circulation du flux ou encore un temps relatif aux différentes étapes du procédé ou opérations que l'appareil de cuisson a à effectuer lors des étapes du procédé.

A titre de variante, d'autres types de moyens de chauffe 10 peuvent être envisagés, notamment un moyen de chauffe par rayonnement générant un flux chauffant 11 rayonnant entrant dans le moyen de réception 1 par l'ouverture supérieure 3, ou encore un moyen de chauffe disposé dans ou sous le moyen de réception 1. Si désiré le moyen de chauffe peut être solidaire du moyen de réception 1.

A titre de variante, le moyen de remuage 2 n'est pas nécessairement entraîné en rotation dans le moyen de réception 1. Notamment, le moyen de réception peut être monté entraîné en rotation, si désiré dans un boîtier.

A titre de variante, le moyen de réception 1 n'est pas nécessairement formé par une cuve. Le moyen de réception présente de préférence un fond et une paroi latérale. Le moyen de réception peut notamment être formé par un panier ajouré.

Pour mieux comprendre le procédé selon l'invention, le fonctionnement et l'utilisation de l'appareil sont décrits en détail ci-après.

Selon l'invention, l'interface de commande C électronique permet de mettre en œuvre un procédé particulier de cuisson permettant de cuire simultanément différents ingrédients avec des niveaux de cuisson différents selon chaque ingrédient. En outre le procédé permet de conserver les qualités organoleptiques des différents ingrédients.

En référence à la figure 4, le procédé de cuisson comprend pour cela trois étapes principales. Une étape initiale (E0) du procédé consiste à positionner les ingrédients différents dans la ou les zones définies du moyen de réception. De cette manière, certains ingrédients se trouveront au moins en partie directement sous le flux chauffant ce qui aura pour effet qu'ils seront soumis à un apport calorifique plus important que les autres ingrédients positionnés dans l'autre zone lors de la première étape (E1) de cuisson.

Cette première étape (E1) consiste à, pendant une durée déterminée, neutraliser le mouvement relatif de rotation du moyen de réception 1 et du moyen de remuage 2, à maintenir la température à l'intérieur de l'appareil à une première valeur de température et à commander les moyens chauffants de manière à réguler le flux chauffant selon une première vitesse de circulation.

Selon la première étape, la non rotation du moyen de remuage 2 permet d'exposer uniquement certains ingrédients directement au flux chauffant, ceux qui sont positionnés dans la zone du moyen de réception se trouvant sous ou à côté de la sortie de la tuyère. Dans cette étape, la vitesse du flux chauffant est contrôlée. Le fait de pouvoir contrôler la vitesse de ce flux permet de maitriser la rapidité et la cinétique de cuisson de ces aliments de manière à les cuire en conservant leurs qualités organoleptiques.

Ceci est très intéressant lorsque l'on a, dans le moyen de réception, des ingrédients qui nécessitent des temps de cuisson très différents comme nous le verrons par la suite. A l'issue de cette première étape les aliments nécessitant le plus grand temps de cuisson, et positionnés dans la première zone de cuisson, sont en partie déjà cuits et il faut finir de les cuire tout en cuisant les aliments positionnés dans la seconde zone du moyen de réception. Cette opération est opérée durant la deuxième étape (E2) de cuisson.

En effet, la deuxième étape du procédé consiste à simultanément activer le mouvement relatif de rotation du moyen de réception 1 et du moyen de remuage 2, maintenir la température à l'intérieur de l'appareil à une deuxième valeur de température supérieure ou égale à la température de la première étape et à commander les moyens chauffants de manière à réguler le flux chauffant selon une deuxième vitesse de circulation.

La deuxième étape correspond à la phase de cuisson des différents ingrédients ensemble. Le remuage des aliments dans le récipient ne permet plus de distinguer les différents ingrédients et la cuisson s'opère de la même façon pour l'ensemble des ingrédients qui sont mélangés dans cette étape. La vitesse de circulation du flux choisie pour cette deuxième étape, permet d'affiner la cuisson des ingrédients déjà cuits de la première zone et de cuire complètement les ingrédients de la seconde zone.

Le mouvement relatif de rotation du moyen de remuage et du moyen de réception peut-être continu ou intermittent.

Selon une variante de réalisation, la température de la première étape est comprise entre 80°C et 150°C. La température de la deuxième étape est comprise entre 100°C et 200°C.

Le choix des températures dépend notamment des types d'ingrédients à cuire.

L'invention s'utilise de la manière qui va être décrite ci-dessous :
L'utilisateur met en place le moyen de réception 1 dans le logement 5 du boîtier 4, monte le moyen de remuage 2 dans le moyen de réception 1, dispose les ingrédients dans le moyen de réception 1 et ajoute si désiré de la matière grasse ou de l'huile en utilisant une cuillère 36.

Selon la recette voulue, l'utilisateur place les ingrédients selon une disposition particulière dans au moins les deux zones de cuisson distinctes du moyen de réception de manière à ce qu'au moins un ingrédient se trouve au moins en partie directement sous le flux chauffant. En règle générale les ingrédients qui nécessitent le plus long temps de cuisson sont placés dans la zone qui se trouve directement au dessus ou à côté de la sortie de la tuyère de sortie.

Lors de la mise en marche de l'appareil, l'utilisateur sélectionne le mode de cuisson approprié et choisit le temps de cuisson par l'intermédiaire de l'interface de commande. Selon une autre variante, une durée prédéterminée peut-être affichée puis modifiée par l'utilisateur en fonction de l'aliment et ou de la recette. A titre d'exemple la durée totale du cycle de cuisson est comprise entre 10 et 50 min. Selon une autre variante encore, le mode de cuisson et le temps de cuisson sont transférés du dispositif distant (TER) vers l'appareil de cuisson.

Lorsque le cycle de cuisson démarre, la première étape de procédé selon l'invention est déclenchée par l'interface de commande. Celle-ci commande les moyens de chauffe 10 pour générer le flux chauffant 11 entrant dans le moyen de réception 1 par l'ouverture supérieure 3 et par la tuyère de sortie. Par ailleurs, le moteur 25 entraînant en rotation le moyen de remuage 2 dans le moyen de réception 1 n'est pas activé. La régulation de température selon la première valeur de température est assurée par exemple par l'intermédiaire d'un capteur de type CTN (coefficient de température négatif). Les moyens chauffants sont également activés de manière à réguler le flux chauffant selon une première vitesse de circulation de l'air. Lorsque la durée de la première étape est écoulée, la deuxième étape du procédé selon l'invention débute.

Selon cette deuxième étape, les moyens de chauffe sont maintenus actifs. La température de régulation est modifiée et augmentée jusqu'à une deuxième valeur. Simultanément, le moteur 25 entraînant en rotation le moyen de remuage 2 dans le moyen de réception 1 est activé par l'interface de commande C électronique et les moyens chauffants sont maintenant régulés de manière à ce que le flux chauffant ait une deuxième vitesse de circulation de l'air.

Le moyen de remuage 2 contribue à mélanger les ingrédients entre eux de manière à uniformiser la recette.

Lorsque la durée totale du cycle de cuisson est écoulée, les moyens de chauffe et le moteur sont désactivés.

L'utilisateur peut retirer le moyen de réception 1 du boîtier 4 en utilisant la poignée 8.

La présente invention n'est nullement limitée aux modes de réalisation décrits, mais englobe de nombreuses modifications dans le cadre des revendications.

## Revendications

1. Procédé de cuisson pour un appareil de cuisson comprenant un moyen de réception (1) prévu pour recevoir des ingrédients, un moyen de remuage (2) disposé au sein du moyen de réception (1), au moins un moyen de chauffe principal (10), au moins un moteur de ventilation pour générer un flux chauffant (11), le moyen de réception (1) et le moyen de remuage (2) étant conçus pour être animés d'un mouvement relatif de rotation à une certaine vitesse, l'appareil comprenant au moins une interface de commande (C) du mouvement relatif de rotation, du au moins un moyen de chauffe principal et du au moins un moteur de ventilation, le procédé de cuisson comprend au moins les étapes suivantes :
- une première étape (E1) de cuisson durant laquelle le mouvement relatif de rotation du moyen de réception (1) et du moyen de remuage (2) est neutralisé, au moins un moyen de chauffe principal (10) est commandé pour réguler la température selon une première valeur de consigne ;
- une deuxième étape (E2) de cuisson durant laquelle le mouvement relatif de rotation du moyen de réception (1) et du moyen de remuage (2) est actif selon une première vitesse du mouvement relatif de rotation du moyen de réception et du moyen de remuage et au moins un moyen de chauffe principal (10) est commandé pour réguler la température selon une deuxième valeur de consigne, supérieure ou égale à la première ;
- ledit procédé étant **caractérisé en ce qu'**il comprend également :
- une étape initiale (E0) dans laquelle au moins un type d'ingrédient est disposé selon une disposition précise dans au moins deux zones de cuisson distinctes du moyen de réception où une des deux zones se trouve au moins en partie directement sous le flux chauffant,
- et **en ce que** :
- - au cours de la première étape au moins un moteur de ventilation est commandé pour réguler le flux chauffant selon une première vitesse de circulation, et
- - au cours de la deuxième étape, au moins un moteur de ventilation est commandé pour réguler le flux chauffant selon une deuxième vitesse de circulation.

2. Procédé de cuisson selon la revendication 1, **caractérisé en ce que** la deuxième étape (E2) de cuisson est réitérée avec une troisième température de consigne, une troisième vitesse de circulation du flux chauffant et une deuxième vitesse du mouvement relatif de rotation du moyen de réception et du moyen de remuage.

3. Procédé de cuisson selon l'une des revendications précédentes, **caractérisé en ce que** la première valeur de consigne est comprise entre 80°C et 150°C.

4. Procédé de cuisson selon l'une des revendications précédentes, **caractérisé en ce que** la deuxième valeur de consigne est comprise entre 100°C et 200°C.

5. Procédé de cuisson selon l'une des revendications 1 à 4 **caractérisé en ce que** le temps de cuisson cumulé des deux étapes de cuisson correspond au temps de cuisson sélectionné par un utilisateur.

6. Procédé de cuisson selon l'une des revendications 1 à 5 **caractérisé en ce que** la première ou la seconde vitesse du mouvement relatif de rotation du moyen de réception (1) et du moyen de remuage (2) est comprise entre 0 et 10 tr/min.

7. Procédé de cuisson selon l'une des revendications 1 à 6 **caractérisé en ce que** la première vitesse de circulation du flux est comprise entre 10 et 25 m/s.

8. Procédé de cuisson selon l'une des revendications 1 à 7 **caractérisé en ce que** la deuxième vitesse de circulation du flux est comprise entre 10 et 25 m/s.

9. Procédé de cuisson selon l'une des revendications 1 à 8 **caractérisé en ce que** l'appareil de cuisson comprend un module de communication qui est configuré pour recevoir un ou plusieurs signaux de commande d'un terminal (TER) le ou lesdits signaux comprenant au moins une donnée de la première et/ou de la deuxième valeur de consigne de température , et/ou une donnée sur le mouvement relatif de rotation du moyen de réception (1) et du moyen de remuage (2) et/ou une donnée sur la première et deuxième vitesse de circulation du flux et/ou des données de temps de cuisson.

10. Produit programme d'ordinateur comprenant des instructions de code agencées pour mettre en œuvre les étapes d'un procédé selon l'une des revendications 1 à 9, lorsque ledit programme est exécuté sur une interface de commande C d'un appareil de cuisson.

11. Appareil de cuisson comprenant une interface de commande C ayant en mémoire les instructions de code d'un produit programme d'ordinateur selon la revendication précédente et agencée pour exécuter un tel produit programme d'ordinateur.

## Patentansprüche

1. Garverfahren für ein Gargerät, umfassend ein Aufnahmemittel (1), das dafür vorgesehen ist, Zutaten aufzunehmen, ein Rührmittel (2), das im Inneren des Aufnahmemittels (1) angeordnet ist, mindestens ein Haupt-Heizmittel (10), mindestens einen Lüftermotor, um einen Heizstrom (11) zu erzeugen, wobei das Aufnahmemittel (1) und das Rührmittel (2) dafür konzipiert sind, eine relative Drehbewegung mit einer gewissen Geschwindigkeit zu vollführen, wobei das Gerät mindestens eine Schnittstelle zum Steuern (C) der relativen Drehbewegung, des mindestens einen Haupt-Heizmittels und des mindestens einen Lüftermotors umfasst, wobei das Garverfahren mindestens die folgenden Schritte umfasst:
- einen ersten Garschritt (E1), während dem die relative Drehbewegung des Aufnahmemittels (1) und des Rührmittels (2) deaktiviert ist, mindestens ein Haupt-Heizmittel (10) so gesteuert wird, dass die Temperatur gemäß einem ersten Sollwert geregelt wird;
- einen zweiten Garschritt (E2), während dem die relative Drehbewegung des Aufnahmemittels (1) und des Rührmittels (2) gemäß einer ersten Geschwindigkeit der relativen Drehbewegung des Aufnahmemittels und des Rührmittels aktiviert ist, und mindestens ein Haupt-Heizmittel (10) so gesteuert wird, dass die Temperatur gemäß einem zweiten Sollwert gesteuert wird, der größer oder gleich dem ersten ist;
- wobei das Verfahren **dadurch gekennzeichnet ist, dass** es ebenfalls umfasst:
- einen anfänglichen Schritt (E0), bei dem mindestens ein Zutatentyp gemäß einer präzisen Anordnung in mindestens zwei getrennten Garzonen des Aufnahmemittels angeordnet wird, wobei sich eine der zwei Zonen mindestens zum Teil direkt unter dem Heizstrom befindet,
- und dadurch, dass:
- im Lauf des ersten Schritts mindestens ein Lüftermotor so gesteuert wird, dass der Heizstrom gemäß einer ersten Zirkulationsgeschwindigkeit geregelt wird, und
- im Lauf des zweiten Schritts mindestens ein Lüftermotor so gesteuert wird, dass der Heizstrom gemäß einer zweiten Zirkulationsgeschwindigkeit geregelt wird.

2. Garverfahren nach Anspruch 1, **dadurch gekennzeichnet, dass** der zweite Garschritt (E2) mit einer dritten Solltemperatur, einer dritten Zirkulationsgeschwindigkeit des Heizstroms, und einer zweiten Geschwindigkeit der relativen Drehbewegung des Aufnahmemittels und des Rührmittels wiederholt wird.

3. Garverfahren nach einem der vorstehenden Ansprüche, **dadurch gekennzeichnet, dass** der erste Sollwert im Bereich zwischen 80 °C und 150 °C liegt.

4. Garverfahren nach einem der vorstehenden Ansprüche, **dadurch gekennzeichnet, dass** der zweite Sollwert im Bereich zwischen 100 °C und 200 °C liegt.

5. Garverfahren nach einem der Ansprüche 1 bis 4, **dadurch gekennzeichnet, dass** die kumulierte Garzeit der zwei Garschritte der von einem Benutzer ausgewählten Garzeit entspricht.

6. Garverfahren nach einem der Ansprüche 1 bis 5, **dadurch gekennzeichnet, dass** die erste oder die zweite Geschwindigkeit der relativen Drehbewegung des Aufnahmemittels (1) und des Rührmittels (2) im Bereich zwischen 0 und 10 U/min liegt.

7. Garverfahren nach einem der Ansprüche 1 bis 6, **dadurch gekennzeichnet, dass** die erste Zirkulationsgeschwindigkeit des Stroms im Bereich zwischen 10 und 25 m/s liegt.

8. Garverfahren nach einem der Ansprüche 1 bis 7, **dadurch gekennzeichnet, dass** die zweite Zirkulationsgeschwindigkeit des Stroms im Bereich zwischen 10 und 25 m/s liegt.

9. Garverfahren nach einem der Ansprüche 1 bis 8, **dadurch gekennzeichnet, dass** das Gargerät ein Kommunikationsmodul umfasst, das dafür konfiguriert ist, ein oder mehrere Steuersignale von einem Endgerät (TER) zu empfangen, wobei das oder die Signale mindestens eine Angabe des ersten und/oder des zweiten Temperatursollwerts, und/oder eine Angabe bezüglich der relativen Drehbewegung des Aufnahmemittels (1) und des Rührmittels (2), und/oder eine Angabe bezüglich der ersten und zweiten Zirkulationsgeschwindigkeit des Stroms, und/oder Angaben zur Garzeit umfassen.

10. Computerprogrammprodukt, das Codeanweisungen umfasst, die dafür eingerichtet sind, die Schritte eines Verfahrens nach einem der Ansprüche 1 bis 9 umzusetzen, wenn das Programm auf einer Steuerschnittstelle C eines Gargeräts ausgeführt wird.

11. Gargerät, das eine Steuerschnittstelle C umfasst, die im Speicher die Codeanweisungen eines Computerprogrammprodukts nach dem vorstehenden Anspruch aufweist und dafür eingerichtet ist, ein solches Computerprogrammprodukt auszuführen.

## Claims

1. Cooking method for a cooking appliance comprising a means for receiving (1) provided to receive ingredients, a means for stirring (2) arranged within the means for receiving (1), at least one main means of heating (10), at least one ventilation motor for generating a heating flux (11), the means for receiving (1) and the means for stirring (2) being designed to be animated by a relative movement of rotation at a certain speed, with the appliance comprising at least one interface for controlling (C) the relative movement of rotation, of the at least one main means of heating and of the at least one ventilation motor, the cooking method comprises at least the following steps:
- a first step (E1) of cooking during which the relative movement of rotation of the means for receiving (1) and of the means for stirring (2) is neutralised, at least one main means of heating (10) is controlled in order to adjust the temperature according to a first setpoint value;
- a second step (E2) of cooking during which the relative movement of rotation of the means for receiving (1) and of the means for stirring (2) is active according to a first speed of the relative movement of rotation of the means for receiving and of the means for stirring and at least one main means of heating (10) is controlled in order to adjust the temperature according to a second setpoint value, greater than or equal to the first;
- said method being **characterised in that** it also comprises:
- an initial step (E0) in which at least one type of ingredient is arranged according to a precise arrangement in at least two separate cooking zones of the means for receiving where one of the two zones is at least partially directly under the heating flux,
- and **in that**:
- - during the first step at least one ventilation motor is controlled in order to adjust the heating flux according to a first circulation speed, and
- - during the second step, at least one ventilation motor is controlled in order to adjust the heating flux according to a second circulation speed.

2. Cooking method according to claim 1, **characterised in that** the second step (E2) of cooking is reiterated with a third setpoint temperature, a third circulation speed of the heating flux and a second speed of the relative movement of rotation of the means for receiving and of the means for stirring.

3. Cooking method according to one of the preceding claims, **characterised in that** the first setpoint value is between 80°C and 150°C.

4. Cooking method according to one of the preceding claims, **characterised in that** the second setpoint value is between 100°C and 200°C.

5. Cooking method according to one of claims 1 to 4 **characterised in that** the total cooking time of the two steps of cooking corresponds to the cooking time selected by a user.

6. Cooking method according to one of claims 1 to 5 **characterised in that** the first or the second speed of the relative movement of rotation of the means for receiving (1) and of the means for stirring (2) is between 0 and 10 rpm.

7. Cooking method according to one of claims 1 to 6 **characterised in that** the first circulation speed of the flux is between 10 and 25 m/s.

8. Cooking method according to one of claims 1 to 7 **characterised in that** the second circulation speed of the flux is between 10 and 25 m/s.

9. Cooking method according to one of claims 1 to 8 **characterised in that** the cooking appliance comprises a communication module that is configured to receive one or several control signals from a terminal (TER) the signal or signals comprise at least data of the first and/or of the second temperature setpoint value, and/or data on the relative movement of rotation of the means for receiving (1) and of the means for stirring (2) and/or data on the first and second circulation speed of the flux and/or cooking time data.

10. Computer program product comprising code instructions arranged to implement the steps of a method according to one of claims 1 to 9, when said program is executed on a control interface C of a cooking appliance.

11. Cooking appliance comprising a control interface C having in memory the code instructions of a computer program product according to the preceding claim and arranged to execute such a computer program.
